# EUROPÄISCHE PATENTSCHRIFT

(11) **EP 1 872 183 B1**
(45) Veröffentlichungstag und Bekanntmachung des Hinweises auf die Patenterteilung: **10.09.2008**
(21) Anmeldenummer: 06723793.3
(22) Anmeldetag: 29.03.2006
(51) Int. Cl.: G05B 19/401

(54) **ANORDNUNG ZUR SYSTEMFERNEN PROGRAMMIERUNG EINES MESSSYSTEMS FÜR WERKSTÜCKE**
ARRANGEMENT FOR REMOTE SYSTEM PROGRAMMING A MEASURING SYSTEM FOR WORKPIECES
DISPOSITIF DE PROGRAMMATION DISTANTE DU SYSTEME D'UN EQUIPEMENT DE MESURE DE PIECES

(30) Priorität: 18.04.2005 DE 102005017940
(43) Veröffentlichungstag der Anmeldung: 02.01.2008
(73) Patentinhaber: OGP Messtechnik GmbH, 65719 Hofheim-Wallau (DE)
(72) Erfinder: LENZ, Karl, Jürgen, 65185 Wiesbaden (DE)
(74) Vertreter: Luderschmidt, Schüler & Partner
(86) Internationale Anmeldenummer: PCT/EP2006/002824
(87) Internationale Veröffentlichungsnummer: WO 2006/111249

(56) Entgegenhaltungen:
- WO-A-02/23292
- US-A- 4 901 253
- US-A- 5 721 587

## Beschreibung

Die Erfindung betrifft eine Anordnung zur systemunabhängigen Programmierung eines Messsystems für Werkstücke, das eine Video-Messeinheit und eine Auswerteinrichtung umfasst.

Eine solche Anordnung ist aus der Druckschrift U S 4,901,253 bekannt.

Zur Vermessung von Strukturen eines Werkstückes sind verschiedene Messsysteme bekannt, die über eine Messeinheit mit einem mechanischen Tastkopf oder eine Video-Kamera verfügen, mit denen die Koordinaten der Strukturen erfasst werden.

Bei den optischen Koordinaten-Messsystemen bildet die Video-Kamera die Oberfläche des Werkstücks ab. Die Video-Kamera erzeugt ein Ausgangssignal, das die aufgenommene Abbildung des Werkstücks beschreibt. Zur Ausgabe des Video-Ausgangssignals verfügt die Video-Messeinheit über eine Ausgabeeinheit mit einer standardisierten Schnittstelle.

Die Video-Messeinheit der bekannten Messsysteme stellt an der Ausgabeeinheit ein standardisiertes analoges TV-Videosignal zur Verfügung, das grundsätzlich die Wiedergabe auf einem TV-Gerät ermöglicht. Die bekannten Standards sind PAL- und NTSC.

Neben der Video-Messeinheit umfassen die bekannten Messsysteme eine Auswerteinrichtung. Die Auswerteinrichtung verfügt über eine Eingabeeinheit zur Eingabe des analogen Video-Ausgangssignals der Videokamera und eine Einrichtung zur Darstellung der von der Video-Messeinheit aufgenommenen Abbildung des Werkstücks auf einer Anzeigeeinheit, beispielsweise einem Monitor.

Ein wesentlicher Bestandteil der Auswerteinrichtung ist eine Bildanalyseeinrichtung, die es erlaubt, die zu vermessenden Strukturen in der Abbildung des Werkstückes zu erkennen. Diese Bildanalyseeinrichtung macht von den bekannten Bilderkennungs-Programmen Gebrauch. Die Vermessung der Strukturen erfolgt mit einer Messeinrichtung, mit der die Abmessungen der festgelegten geometrischen Strukturen bestimmt werden.

Die bekannten Messsysteme werden zur Qualitätskontrolle von Werkstücken eingesetzt; die in großen Stückzahlen produziert werden. Daher soll die Messwerterfassung vollautomatisch erfolgen.

Es sind programmierbare Messsysteme für Werkstücke bekannt, die nach einem vorgegebenen Programmablauf festgelegte Strukturen des Werkstückes in einer vorgegebenen Reihenfolge erkennen und die Abmessungen der Strukturen bestimmen (CNC-Betrieb). Hierzu ist eine Programmierung des Messsystems erforderlich. Zur Programmierung wählt der Benutzer die zu vermessenden Strukturen in einer vorgegebenen Reihenfolge aus.

Die Datenübertragung zwischen der Ausgabeeinheit der Video-Messeinheit und der Eingabeeinheit der Auswerteinrichtung erfolgt über ein konventionelles Video-Kabel.

Nachteilig ist, dass während der Programmierung das Messsystem für die Qualitätskontrolle nicht zur Verfügung steht. Für einen kontinuierlichen Betrieb ist daher die relativ kostspielige Anschaffung von mindestens zwei Messsystemen notwendig, die jeweils eine Video-Messeinheit und eine Auswerteinrichtung umfassen.

Der Erfindung liegt die Aufgabe zugrunde, eine Anordnung bereitzustellen,die eine systemunabhängige (offline) Programmierung eines Messsystems für Werkstücke erlaubt, das eine Video-Messeinheit mit einer Ausgabeeinheit zur Ausgabe des Video-Ausgangssignals und eine Auswerteinrichtung mit einer Eingabeeinheit zur Eingabe des Video-Ausgangssignals der Video-Messeinheit umfasst.

Diese Aufgabe wird erfindungsgemäß mit den im Patentanspruch 1 angegebenen Merkmalen gelöst. Vorteilhafte Ausführungsformen der Erfindung sind Gegenstand der Unteransprüche.

Das Funktionsprinzip der erfindungsgemäßen Anordnung beruht darauf, dass mit der Auswerteinrichtung des Messsystems anstelle einer realen mit der Video-Messeinheit aufgenommenen Abbildung des Werkstücks ein virtuelles Videobild ausgewertet wird, das auf der Grundlage der für das Werkstück zur Verfügung stehende CAD-Daten erzeugt wird.

Die erfindungsgemäße Anordnung macht nur von der Auswerteinrichtung des Messsystems für Werkstücke Gebrauch, die mit einem Personalcomputer (PC) und der entsprechenden Software mit verhältnismäßig geringen Kosten zur Verfügung gestellt werden kann. Von der relativ kostspieligen Video-Messeinheit des Messsystems macht die erfindungsgemäße Anordnung hingegen keinen Gebrauch. Daher ist nur die Anschaffung einer zweiten Auswerteinrichtung erforderlich, um zeitgleich Strukturen von Werkstücken vermessen und das Messsystem programmieren zu können.

Neben der Auswerteinrichtung verfügt die erfindungsgemäße Anordnung über eine Vorrichtung zur Programmierung des Messsystems.

Die Vorrichtung zur Programmierung des Messsystems weist eine Einrichtung zum Lesen von CAD-Daten (Computer Aided Design) auf, die die geometrischen Abmessungen des Werkstücks beschreiben. Derartige Daten können in verschiedenen Formaten, beispielsweise die bekannten Formate IGS, STEP, DXF, zur Verfügung gestellt werden. Die CAD-Daten können in den bekannten Datenträgern bereitgestellt werden. Beispielsweise kann die Einrichtung zum Lesen von CAD-Daten ein Diskettenlaufwerk sein.

Darüber hinaus verfügt die Programmiervorrichtung über eine Einrichtung zur Verarbeitung von CAD-Daten und zur Darstellung von verschiedenen Abbildungen des Werkstücks auf einer Anzeigeeinheit, die von dem Anwender ausgewählt werden können. Damit hat der Anwender die Möglichkeit, die für die Messung relevanten Abbildungen des Werkstücks auszuwählen, ohne das Werkstück mit einer Video-Messeinheit abbilden zu müssen.

Desweiteren verfügt die Programmiervorrichtung über eine Einrichtung zur Erzeugung eines Video-Ausgangssignals, das die vom Anwender ausgewählte Abbildung des Werkstücks beschreibt. Zur Ausgabe des Video-Ausgangssignals weist die Programmiervorrichtung eine Ausgabeeinheit auf.

Die Ausgabeeinheit der Programmiervorrichtung ist über die Datenübertragungseinrichtung mit der Eingabeeinheit der Auswerteinrichtung des Messsystems verbunden, so dass die Auswerteinrichtung des Messsystems das Video-Ausgangssignal der Programmiervorrichtung anstelle des Video-Ausgangssignals der Video-Messeinheit empfängt.

Bei der Programmierung macht die Programmiervorrichtung von der Auswerteinrichtung des Messsystems Gebrauch. Die offline Programmierung erfolgt also wie die online Programmierung des Messsystems, der Unterschied liegt nur darin, dass die Video-Messeinheit weiterhin für die Qualitätskontrolle mit einer zweiten Auswerteinrichtung zur Verfügung steht.

Bei einer bevorzugten Ausführungsform ist die Auswerteinrichtung, die Bestandteil der Anordnung zur offline Programmierung des Messsystems ist, ein Personal-Computer (PC) mit einer Anzeigeeinheit, wobei auf dem Personal-Computer ein Programm zur Verarbeitung der das Werkstück beschreibenden CAD-Daten und zur Darstellung verschiedener vom Anwender auszuwählender Abbildungen des Werkstücks auf der Anzeigeeinheit geladen ist. Es ist ausreichend, wenn auf dem Personal Computer ein handelsübliches Programm läuft, das nur die Darstellung der Abbildungen des Werkstückes, nicht aber die Konstruktion des Werkstückes erlaubt. Auf dem Personal Computer kann aber auch ein handelsübliches CAD-Programm geladen sein, mit dem die Werkstücke zusätzlich auch entworfen werden können.

Für den Fall, dass die Video-Messeinheit des Messsystems, für das die Programmieranordnung bereitgestellt wird, über eine Ausgabeeinheit zur Ausgabe eines analogen TV-Video-Ausgangssignals nach dem bekannten Standard (PAL oder NTSC) verfügt, weist die Programmiervorrichtung, die Bestandteil der Anordnung zur offline Programmierung des Messsystems ist, eine Einrichtung zur Erzeugung eines analogen Video-Ausgangssignals auf. Wenn ein Personal Computer als Auswerteinrichtung Verwendung findet, kann hierzu ein bekannter PC-TV Konverter eingesetzt werden, der an die Grafikkarte des PC angeschlossen wird. Derartige Konverter ermöglichen den Anschluss eines TV-Gerätes oder Video-Rekorders an einen PC. Sie wandeln das VGA-Signal des PC wahlweise in PAL oder NTSC um. Vorzugsweise verfügt der VGA-TV Konverter über eine Einrichtung zur automatischen Einstellung der Ausgabegröße und Position des Bildes auf dem Bildschirm.

Für den Fall, dass die Video-Messeinheit des Messsystems ein digitales Video-Ausgangssignal bereitstellen sollte, verfügt die Programmiervorrichtung über eine Einrichtung zur Erzeugung eines digitalen Video-Ausgangssignals, wobei die Ausgabeeinheit das digitale Video-Ausgangssignal nach den bekannten Standards ausgibt.

Die Datenübertragungseinrichtung ist zweckmäßigerweise ein konventionelles Verbindungskabel. Derartige Verbindungskabel für die unterschiedlichen Standards sind dem Fachmann bekannt. Grundsätzlich ist es aber auch möglich, die Daten als Funksignale oder optische Signale zu übertragen. Die Datenübertragungseinrichtung kann auch Bestandteil eines Netzwerks sein. Auch kann die Übertragung der Daten mittels Datenträgern erfolgen.

Die Ausgabeeinheit der Programmiervorrichtung und die Eingabeeinheit der Auswerteinrichtung können als eine auf dem Gebiet der Messtechnik übliche Schnittstelle ausgebildet sein, beispielsweise nach dem Standard I++.

Die Programmiervorrichtung der erfindungsgemäßen Anordnung wird vorzugsweise als unabhängige Einheit zur Verfügung gestellt. Grundsätzlich ist es aber auch möglich, sowohl die Auswerteinrichtung des Messsystems als auch die Programmiervorrichtung als eine Einheit, beispielsweise einen Personal-Computer bereitzustellen, auf dem zwei Programme unabhängig voneinander laufen.

Von Vorteil ist, wenn sowohl die Programmiervorrichtung als auch die Auswerteinrichtung über verschiedene Anzeigeeinheiten, beispielsweise Monitore, verfügen. Grundsätzlich ist es aber auch möglich, alle Abbildungen auf nur einem Monitor darzustellen. Die hierfür erforderliche Hard- und Software ist dem Fachmann bekannt.

Im Folgenden wird ein Ausführungsbeispiel der Erfindung unter Bezugnahme auf die Zeichnungen näher erläutert.

Es zeigen:
- Figur 1: Eine vereinfachte schematische Darstellung der wesentlichen Komponenten eines bekannten Messsystems, das eine Video-Messeinheit und eine Auswerteinrichtung umfasst, und
- Figur 2: die erfindungsgemäße Anordnung zur systemunabhängigen Programmierung des Messsystems von Figur 1 in vereinfachter schematischer Darstellung.

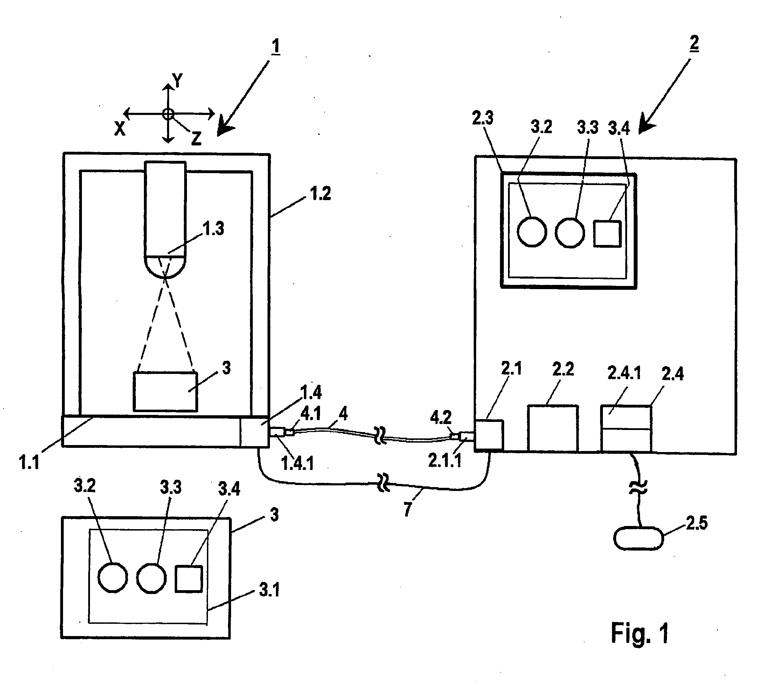

Figur 1 zeigt ein bekanntes Messsystem zur automatischen Vermessung von Strukturen eines Werkstückes, bei dem es sich um ein programmierbares Koordinaten-Messgerät handelt. Das Messsystem umfasst eine Video-Messeinheit 1 und eine Auswerteinrichtung 2 als zwei unabhängige Komponenten, die zur Übertragung der entsprechenden Daten miteinander verbunden sind.

Die Video-Messeinheit 1 weist einen Messtisch 1.1 auf, auf dem das Werkstück 3 liegt. Oberhalb des Messtisches 1.1 ist an einem Gestell 1.2 eine Video-Kamera 1.3 zur Erfassung der Oberfläche des Werkstücks 3 entlang der X-, Y-, und Z-Achse längsverschiebbar geführt. Die Video-Kamera 1.3 der Video-Messeinheit 1 erzeugt ein analoges PAL oder NTSC-Video-Ausgangssignal, das Bildinformationsdaten enthält, die eine von dem optischen Messwertaufnehmer 1.3 aufgenommene Abbildung des Werkstücks 3 beschreibt. Das analoge TV-Video-Ausgangssignal in PAL oder NTSC wird auf einer Ausgabeeinheit 1.4 ausgegeben, die eine Buchse 1.4.1 zum Anschluss des Steckers 4.1 eines Video-Kabels 4 aufweist. Neben dem Video-Signal stellt die Video-Messeinheit 1 ein Signal zur Verfügung, das die X, Y und Z-Koordinaten des Mittelpunktes der von der Video-Kamera 1.3 erfassten Abbildung 3 angeben.

Die Auswerteinrichtung 2 des Messsystem kann aus einem PC mit einem Monitor bestehen, auf dem eine Bildanalyse-Software läuft. Sie verfügt über eine Eingabeeinheit 2.1 zur Eingabe des Video-Ausgangssignals der Video-Messeinheit 1. Die Eingabeeinheit 2.1 weist eine Buchse 2.1.1 auf, an den der Stecker 4.2 des Video-Kabels 4 angeschlossen ist. Neben dem Video-Signal empfängt die Auswerteinrichtung das X, Y und Z-Koordinaten-Signal der Video-Messeinheit 1. Zur Datenübertragung ist ein Datenkabel 7 vorgesehen, das an der Video-Messeinheit 1 und der Auswerteinrichtung 2 angeschlossen ist. Hierzu verfügen die Messeinheit und die Auswerteinrichtung über entsprechende Schnittstellen.

Darüber hinaus weist die Auswerteinrichtung 2 eine Einrichtung 2.2 zur Darstellung der von der Video-Kamera 1.3 aufgenommenen Abbildung des Werkstückes 3 auf einer Anzeigeeinheit 2.3 auf. In Fig. 1 ist auf der Anzeigeeinheit 2.3 die von der Video-Messeinheit 1 aufgenommene Abbildung 3.1 des Werkstücks 3 zu erkennen. Bei der zu vermessenen Struktur handelt es sich um eine kreisförmige Ausnehmung 3.2, deren Radius zu bestimmen ist. Ferner sind die geometrischen Abmessungen weiterer geometrischer Strukturen 3.3, 3.4 des Werkstücks in einer vom Benutzer vorzugebenen Reihenfolge zu ermitteln. Hierfür wird der optische Messwertaufnehmer 1.3 der Video-Kamera 1.3 über das Werkstück entlang der X-, Y-, Z-Achse verfahren. Zur Vermessung der Strukturen verfügt die Auswerteinrichtung über eine Messeinrichtung 2.4, die eine Bildanalyseeinrichtung 2.4.1 zur Erkennung der vom Benutzer festgelegten Strukturen auf dem Werkstück aufweist.

Zur Programmierung des Messsystems werden vom Benutzer die zu vermessenden Strukturen 3.2, 3.3, 3.4 des Werkstücks 3 in einer vorgegebenen Reihenfolge ausgewählt, in dem die Video-Kamera 1.3 der Video-Messeinheit 1 über das Werkstück verfahren wird, während die Abbildung 3.1 des Werkstücks, in der die zu vermessende Struktur liegt, auf der Anzeigeeinheit betrachtet und die zu vermessenden Strukturen beispielsweise mit einer Computer-Maus 2.5 per Maus-Klick ausgewählt werden.

Nachdem der Anwender die Reihenfolge der zu vermessenden Strukturen des Werkstücks festgelegt hat (Lernprogrammierung), kann die Qualitätskontrolle der Werkstücke mit dem Messsystem vollautomatisch erfolgen. Die ermittelten Größen, beispielsweise Abstände, Durchmesser oder Winkel werden mit den Sollwerten des Werkstücks verglichen und die Toleranzen in einem Messprotokoll ausgegeben.

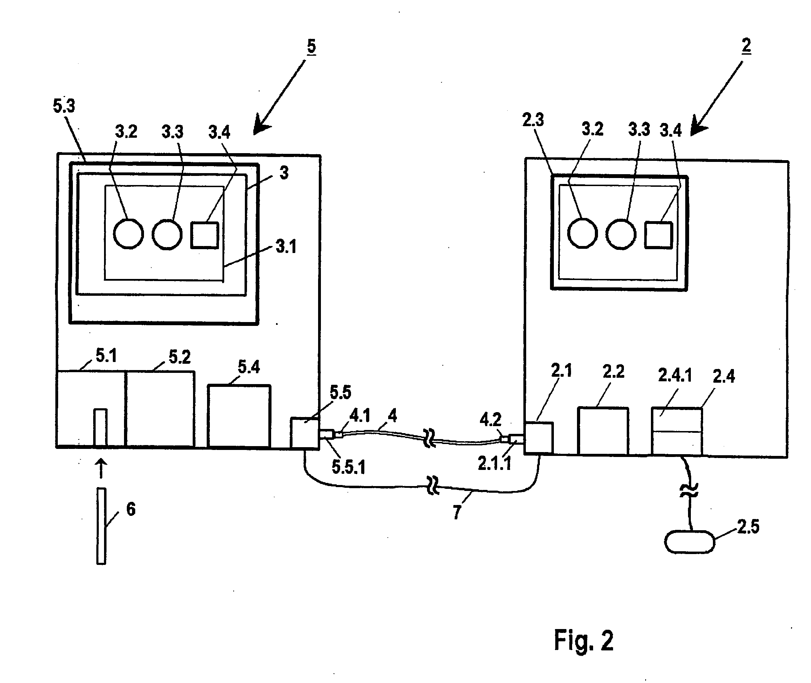

Nachfolgend wird die erfindungsgemäße Anordnung zur systemunabhängigen (offline) Programmierung des bekannten Messsystems unter Bezugnahme auf Figur 2 beschrieben.

Die erfindungsgemäße Anordnung macht von der Auswerteinrichtung 2 des bekannten Messsystems Gebrauch. Die einzelnen Komponenten der Auswerteinrichtung 2 sowohl des bekannten Messsystems als auch der erfindungsgemäßen Anordnung sind daher mit den gleichen Bezugszeichen versehen. Neben der Auswerteinrichtung 2 verfügt die erfindungsgemäße Anordnung über eine Einrichtung 5 zur Programmierung des Messsystems, die vorzugsweise eine unabhängige Einheit bildet.

Die Programmiervorrichtung 5 weist eine Einrichtung 5.1 zum Lesen von die geometrischen Abmessungen des Werkstückes beschreibenden CAD-Daten auf. Die Daten können beispielsweise auf einer Diskette 6 bereitgestellt und in die Programmiervorrichtung eingelesen werden. Darüber hinaus weist die Programmiervorrichtung 5 eine Einrichtung 5.2 zur Verarbeitung der CAD-Daten und zur Darstellung von verschiedenen Abbildungen des Werkstücks auf einer Anzeigeeinheit 5.3 auf, die von dem Anwender ausgewählt werden können. In Fig. 2 ist auf der Anzeigeeinheit 5.3 die mit den CAD-Daten erstellte Abbildung 3.1' des Werkstücks 3 zu erkennen. Der Anwender wählt aus dem Videobild eine Abbildung 3.1' des Werkstücks aus, das die zu vermessende Struktur 3.2' zeigt. Die Abbildung 3.1' entspricht dem realen Videobild, das ansonsten die Video-Messeinheit 1 erfassen würde.

Zur Erzeugung eines analogen TV-Video-Ausgangssignals, das Bildinformations-Daten enthält, die die vom Anmelder ausgewählte Abbildung 3.1' des Werkstücks 3 beschreiben, verfügt die Programmiervorrichtung über eine weitere Einrichtung 5.4 und eine Ausgabeeinheit 5.5 mit einem Stecker 5.5.1 zur Ausgabe des Video-Ausgangssignals. Die Einrichtung 5.5 erzeugt ein analoges TV-Video-Ausgangssignal in PAL bzw. NTSC.

Mit einem Video-Kabel 4, das an den Buchsen 5.5.1 und 2.1.1 der Ausgabeeinheit 5.5 der Programmiervorrichtung 5 bzw. der Eingabeeinheit 2.1 der Auswerteinrichtung 2 angeschlossen ist, wird das analoge Video-Ausgangssignal der Programmiervorrichtung 5 anstelle des Video-Ausgangssignals der Video-Messeinheit 1 des Messsystems an die Auswerteinrichtung 2 des Messsystems übertragen. Die Auswerteinrichtung erlaubt dann die Programmierung (Lernprogrammierung) des Messsystems in gewohnter Weise, wie oben beschrieben ist. Da während der Lemprogrammierung von der Video-Messeinheit 1 kein Gebrauch gemacht wird, kann die Video-Messeinheit zusammen mit einer weiteren Auswerteinrichtung zur Qualitätskontrolle eingesetzt werden.

Bei der Programmiervorrichtung 5 der erfindungsgemäßen Anordnung kann es sich um einen Personal-Computer (PC) mit einem Monitor handeln, auf dem ein Programm zur Verarbeitung von CAD-Daten und zur Darstellung der mit CAD-Daten erzeugten Abbildungen des Werkstücks läuft. Dabei ist die Einrichtung zur Erzeugung des analogen Video-Ausgangssignals ein handelsüblicher Konverter zur Umwandlung des VGA-Signals des Computers in ein TV-Video-Signal in PAL oder NTSC. Die Auswahl der unterschiedlichen Abbildungen des Werkstücks kann mittels der auf dem PC laufenden CAD-Software so erfolgen, wie mit der Video-Messeinheit. So können die Bewegungen der Video-Messeinheit in Richtung der X-, Y- und Z-Achse dadurch simuliert werden, dass ein Fenster vom Anwender vorgegeben wird, mit dem der entsprechende Ausschnitt gewählt wird. Über derartige Möglichkeiten verfügen handelsübliche CAD-Programme oder lassen sich mit den in den CAD-Programmen im allgemeinen vorhandenen Schnittstellen erzeugen.

Für den Fall, dass nicht alle zu vermessenden Strukturen auf der Anzeigeeinheit 2.3 der Auswerteinrichtung 2 angezeigt werden, ist es erforderlich, für die Simulation die X, Y, Z-Koordinaten des Mittelpunktes des Videobildes bereitzustellen. Die Bereitstellung dieser Koordinaten kann mit der Programmiervorrichtung 5 erfolgen, da das auf dem Personal-Computer laufende CAD-Programm die entsprechenden Daten ohnehin bereitstellt. Diese Daten können mit einer Datenleitung 7 von der Programmiervorrichtung 5 an die Auswerteinrichtung 2 übertragen werden. Hierzu stehen die bekannten Schnittstellen zur Verfügung.

## Patentansprüche

1. Anordnung zur offline Programmierung eines Messsystems für Werkstücke,
wobei das Messsystem aufweist:
a) eine Video-Messeinheit zur Erzeugung eines Ausgangssignals, das Bildinformations-Daten enthält, die eine mit der Video-Messeinheit aufgenommene Abbildung des Werkstücks beschreiben, wobei die Video-Messeinheit eine Ausgabeeinheit zur Ausgabe des Video-Ausgangssignals aufweist,
b) eine Auswerteinrichtung (2) mit
einer Eingabeeinheit (2.1) zur Eingabe des Video-Ausgangssignals der Video-Messeinheit,
einer Einrichtung (2.2) zur Darstellung der von der Video-Messeinheit aufgenommenen Abbildung des Werkstücks auf einer Anzeigeeinheit (2.3), und
einer Messeinrichtung (2.4) zur Vermessung der Strukturen, die eine Bildanalyseeinrichtung (2.4) zur Erkennung von Strukturen in der Abbildung des Werkstücks aufweist,
c) eine an die Ausgabeeinheit (1.4) der Video-Messeinheit (1) und die Eingabeeinheit (2.1) der Auswerteinrichtung (2) anschließbare Datenübertragungseinrichtung (4) zur Übertragung des Video-Ausgangssignals der Video-Messeinheit an die Auswerteinrichtung,
**dadurch gekennzeichnet,**
**dass** die Anordnung zur offline Programmierung des Messsystems die Auswerteinrichtung (2) des Messsystems und eine Einrichtung (5) zur Programmierung des Messsystems aufweist, wobei die Einrichtung (5) zur Programmierung des Messsystems aufweist:
eine Einrichtung (5.1) zum Lesen von CAD-Daten, die die geometrischen Abmessungen des Werkstücks beschreiben,
eine Einrichtung (5.2) zur Verarbeitung der CAD-Daten und zur Darstellung von verschiedenen Abbildungen des Werkstücks auf einer Anzeigeeinheit (5.3), die von dem Anwender auswählbar sind,
eine Einrichtung (5.4) zur Erzeugung eines Video-Ausgangssignals, das Bildinformations-Daten enthält, die die vom Anwender ausgewählte Abbildung des Werkstücks beschreiben und
eine Ausgabeeinheit (5.5) zur Ausgabe des Video-Ausgangssignals,
wobei die Datenübertragungseinrichtung (4) an die Eingabeeinheit der Auswerteinrichtung (2) des Messsystems und die Ausgabeeinheit (5.5) der Vorrichtung (5) zur Programmierung des Messsystems angeschlossen ist, so dass die Auswertungseinrichtung des Messsystems das Video-Ausgangssignal der Vorrichtung zur Programmierung des Messsystems empfängt.

2. Anordnung nach Anspruch 1, **dadurch gekennzeichnet, dass** die Vorrichtung (5) zur Programmierung des Messsystems ein Personal-Computer (PC) mit einer Anzeigeeinheit (5.3) aufweist, wobei auf dem Personal-Computer ein Programm zur Verarbeitung von ein Werkstück beschreibenden CAD-Daten und zur Darstellung verschiedener vom Anwender auszuwählender Abbildungen des Werkstücks auf der Anzeigeeinheit geladen ist.

3. Anordnung nach Anspruch 2, **dadurch gekennzeichnet, dass** der Personal-Computer eine Einrichtung (5.4) zur Erzeugung eines analogen Video-Ausgangssignals aufweist, wobei die Eingabeeinheit (2.1) der Auswerteinrichtung (2) des Messsystems eine analoge Eingabeeinheit ist.

4. Anordnung nach Anspruch 3, **dadurch gekennzeichnet, dass** die Einrichtung (5.4) zur Erzeugung eines analogen Video-Ausgangssignals ein Konverter zur Umwandlung eines VGA-Signals in ein TV-Video-Signal ist.

5. Anordnung nach Anspruch 4, **dadurch gekennzeichnet, dass** das analoge Video-Ausgangssignal ein PAL oder NTSC-Videosignal ist.

6. Anordnung nach Anspruch 1 oder 2, **dadurch gekennzeichnet, dass** die Eingabeeinheit (2.1) der Auswerteinrichtung (2) des Messsystems eine digitale Eingabeeinheit ist.

7. Anordnung nach einem der Ansprüche 1 bis 6, **dadurch gekennzeichnet, dass** die Datenübertragungseinrichtung (4) ein an die Eingabeeinheit (2.1) der Auswerteinrichtung (2) des Messsystems und die Ausgabeeinheit (5.5) der Vorrichtung (5) zur Programmierung des Messsystems anschließbares Verbindungskabel ist.

8. Anordnung nach einem der Ansprüche 1 bis 7, **dadurch gekennzeichnet, dass** die Anzeigeeinheit (5.3) der Vorrichtung (5) zur Programmierung des Messsystems ein Bildschirm ist.

## Claims

1. An arrangement for off-line programming of a measuring system for workpieces,
wherein the measuring system has:
a) a video measuring unit for generating an output signal which contains image information data which describe an image of the workpiece recorded with the video measuring unit, wherein the video measuring unit has an output unit for outputting the video output signal,
b) an evaluation device (2) with
an input unit (2.1) for inputting the video output signal of the video measuring unit,
a device (2.2) for representing the image of the workpiece recorded by the video measuring unit on a display unit (2, 3), and
a measuring device (2.4) for surveying the structures which device has an image analysis device (2.4) for detecting structures in the image of the workpiece,
c) a data transmission device (4) that can be connected to the output unit (1.4)( of the video measuring unit (1) and to the input unit (2.1) of the evaluation device (2) for transmitting the video output signal of the video measuring unit to the evaluation device,
**characterised in that**
the arrangement for the off-line programming of the measuring system has the evaluation device (2) of the measuring system and a device (5) for programming the measuring system, wherein the device (5) for programming the measuring system has:
a device (5.1) for reading CAD data which describe the geometric dimensions of the workpiece,
a device (5.2) for processing the CAD data and for representing different images of the workpiece on a display unit (5.3) which may be selected by the user,
a device (5.4) for generating a video output signal which contains image information data which describe the image of the workpiece selected by the user, and
an output unit (5.5) for outputting the video output signal,
wherein the data transmission device (4) is connected to the input unit of the evaluation device (2) of the measuring system and to the output unit (5.5) of the device (5) for programming the measuring system, so that the evaluation device of the measuring system receives the video output signal of the device for programming the measuring system.

2. The arrangement according to claim 1, **characterised in that** the device (5) for programming the measuring system has a personal computer (PC) with a display unit (5.3), wherein a program for processing CAD data describing a workpiece and for representing different images of the workpiece to be selected by the user on the display unit is loaded onto the personal computer.

3. The arrangement according to claim 2, **characterised in that** the personal computer has a device (5.4) for generating an analogue video output signal, wherein the input unit (2.1) of the evaluation device (2) of the measuring system is an analogue input unit.

4. The arrangement according to claim 3, **characterised in that** the device (5.4) for generating an analogue video output signal is a converter for converting a VGA signal to a TV video signal.

5. The arrangement according to claim 4, **characterised in that** the analogue video output signal is a PAL or NTSC video signal.

6. The arrangement according to claim 1 or 2, **characterised in that** the input unit (2.1) of the evaluation device (2) of the measuring system is a digital input unit.

7. The arrangement according to one of claims 1 to 6, **characterised in that** the data transmission device (4) is a connecting cable that can be connected to the input unit (2.1) of the evaluation device (2) of the measuring system and to the output unit (5.5) of the device (5) for programming the measuring system.

8. The arrangement according to one of claims 1 to 7, **characterised in that** the display unit (5.3) of the device (5) for programming the measuring system is a screen.

## Revendications

1. Dispositif de programmation hors ligne d'un équipement de mesure de pièces,
l'équipement de mesure présentant :
a) une unité de mesure vidéo servant à générer un signal de sortie qui contient des données d'information d'image, lesquelles décrivent une reproduction de la pièce enregistrée à l'aide de l'unité de mesure vidéo, l'unité de mesure vidéo présentant une unité de sortie servant à sortir le signal de sortie vidéo,
b) un système d'évaluation (2) comprenant
une unité d'entrée (2.1) servant à entrer le signal de sortie vidéo de l'unité de mesure vidéo,
un système (2.2) servant à représenter la reproduction de la pièce enregistrée par l'unité de mesure vidéo sur une unité d'affichage (2.3), et
un système de mesure (2.4) servant à mesurer les structures, lequel présente un système d'analyse d'image (2.4) servant à reconnaître des structures dans la reproduction de la pièce,
c) un système de transmission de données (4) pouvant être raccordé à l'unité de sortie (1.4) de l'unité de mesure vidéo (1) et à l'unité d'entrée (2.1) du système d'évaluation (2) servant à transmettre le signal de sortie vidéo de l'unité de mesure vidéo au système,
**caractérisé en ce**
**que** le dispositif de programmation hors ligne de l'équipement de mesure présente le système d'évaluation (2) de l'équipement de mesure et un système (5) de programmation de l'équipement de mesure, le système (5) de programmation de l'équipement de mesure présentant :
un système (5.1) de lecture de données DAO qui décrivent les dimensions géométriques de la pièce,
un système (5.2) de traitement des données DAO et de représentation des différentes reproductions de la pièce sur une unité d'affichage (5.3), lesquelles peuvent être sélectionnées par l'utilisateur,
un système (5.4) servant à générer un signal de sortie vidéo qui contient des données d'information d'image, lesquelles décrivent la reproduction de la pièce choisie par l'utilisateur et
une unité de sortie (5.5) pour sortir le signal de sortie vidéo,
le système de transmission des données (4) étant raccordé à l'unité d'entrée du système d'évaluation (2) de l'équipement de mesure et à l'unité de sortie (5.5) du système (5) de programmation de l'équipement de mesure pour que le système d'évaluation de l'équipement de mesure reçoive le signal de sortie vidéo du système de programmation de l'équipement de mesure.

2. Dispositif selon la revendication 1, **caractérisé en ce que** le système (5) de programmation de l'équipement de mesure présente un ordinateur personnel (PC) muni d'une unité d'affichage (5.3), un programme pour le traitement des données DAO décrivant une pièce et pour la représentation de différentes vues de la pièce à sélectionner par l'utilisateur sur l'unité d'affichage étant chargé sur l'ordinateur personnel.

3. Dispositif selon la revendication 2, **caractérisé en ce que** l'ordinateur personnel présente un système (5.4) servant à générer un signal de sortie vidéo analogique, l'unité d'entrée (2.1) du système d'évaluation (2) de l'équipement de mesure étant une unité d'entrée analogique.

4. Dispositif selon la revendication 3, **caractérisé en ce que** le système (5.4) servant à générer un signal de sortie vidéo analogique est un convertisseur destiné à convertir un signal VGA en un signal vidéo TV.

5. Dispositif selon la revendication 4, **caractérisé en ce que** le signal de sortie vidéo analogique est un signal vidéo PAL ou NTSC.

6. Dispositif selon la revendication 1 ou 2, **caractérisé en ce que** l'unité d'entrée (2.1) du système d'évaluation (2) de l'équipement de mesure est une unité d'entrée numérique.

7. Dispositif selon l'une quelconque des revendications 1 à 6, **caractérisé en ce que** le système de transmission des données (4) est un câble de connexion pouvant être raccordé à l'unité d'entrée (2.1) du système d'évaluation (2) de l'équipement de mesure et à l'unité de sortie (5.5) du système (5) de programmation de l'équipement de mesure.

8. Dispositif selon l'une quelconque des revendications 1 à 7, **caractérisé en ce que** l'unité d'affichage (5.3) du système (5) de programmation de l'équipement de mesure est un écran.
